# EUROPEAN PATENT APPLICATION

(11) **EP 4 379 365 A1**
(43) Date of publication of application: **05.06.2024**
(21) Application number: 22867284.6
(22) Date of filing: 01.09.2022
(51) Int. Cl.: G01N 25/00, G06F 30/15, G06F 30/23

(54) **METHOD FOR ANALYZING BEHAVIOR OF PANEL COMPONENT, METHOD FOR PREDICTING DEFECT IN EXTERNAL APPEARANCE OF AUTOMOTIVE PANEL COMPONENT, BEHAVIOR ANALYSIS DEVICE, AND BEHAVIOR ANALYSIS PROGRAM**

(30) Priority: 08.09.2021 JP 2021146242
(71) Applicant: JFE Steel Corporation, Tokyo 100-0011 (JP)
(72) Inventor: IWAMA, Takashi, Tokyo 100-0011 (JP); SATO, Kentaro, Tokyo 100-0011 (JP)
(74) Representative: Grünecker Patent- und Rechtsanwälte PartG mbB
(86) International application number: PCT/JP2022/032989
(87) International publication number: WO 2023/037962

(57) **Abstract**

The behavior of a panel component in the plate thickness direction can be analyzed with greater accuracy. A joint structure in which a panel component and a reinforcing component facing together are connected through one or more elastic adhesives is modeled. A panel component behavior analysis method analyzes the behavior of the panel component by finite element analysis using a computer. From actually measured heating or cooling data of the elastic adhesive, an elastic coefficient including change in elastic coefficient of the elastic adhesive in response to temperature change and using temperature as a parameter is determined. The determined elastic coefficient using temperature as a parameter and a thermal expansion coefficient are set as physical property conditions of the elastic adhesive. The behavior of the panel component is then analyzed in a temperature change condition in which a temperature change is applied to the joint structure in a previously-set temperature range.

## Description

### Technical Field

The present invention relates to a method for analyzing the behavior of a panel component such as an automotive panel component due to thermal deformation and to a method for predicting an appearance defect of an automotive panel component.

The present invention is, for example, a technology suitable for quantitatively predicting an appearance defect of an automotive panel component due to thermal deformation without producing prototypes of an actual component or the entire car body. Specifically, the present invention is, for example, an invention for performing an appearance defect of an automotive panel component due to thermal deformation without actually producing prototypes of an automobile itself or a component. The present invention is a technology suitable for an analytical method for highly accurate prediction with CAE. The above appearance defect is called a surface sink mark (thermal distortion). The above appearance defect causes local out-of-plane deformation or plastic deformation of a panel component associated with thermal deformation of an elastic adhesive (also called mastic) (and thermal deformation of a panel component or a reinforcing component).

### Background Art

Automotive panel components include outer panel components called outer panels (such as a roof panel component and a door panel component) and inner panel components such as a floor component and a dash lower panel (panel components provided inside a car). Such automotive panel components are a group of components having large projected areas. The automotive panel components are thus much lighter than other skeletal components due to smaller plate thicknesses.

A typical automotive panel component as an outer panel component has a gentle and wide curved surface. On the back side of the panel component, a reinforcing component for reinforcing the panel is provided. The panel component and the reinforcing component are connected (joined) together through an elastic adhesive called mastic.

The mastic is a semisolid substance. The mastic foams (expands) due to baking heat in the coating process of coating the automotive body and then hardens (shrinks) due to the subsequent cooling. As a result, the mastic eventually has rubber-like properties. A mastic joining a panel component and a reinforcing component works as a support point when an external force is applied to the panel component and also has an important role, for example, in suppressing vibrations of the panel component.

The surface of an outer panel component is exposed to the eyes of users. The outer panel component is thus required to have a high quality level of the surface appearance. When an outer panel component has a smaller thickness to reduce the automotive body weight, the outer panel component is likely to have a lower surface rigidity called tensile rigidity of the panel component. As the surface rigidity of a panel component decreases, the outer panel component may cause out-of-plane deformation due to a shrinkage force of a mastic generated in the cooling process after coating. The out-of-plane deformation is called a surface sink mark.

In a large size panel component such as a roof panel component, the distortion increases due to thermal deformation of the panel component itself, and the panel component is likely to cause buckling in a temperature rise or decrease process. This causes plastic distortion of the panel component, and the panel component remains deformed even after the temperature is returned to a normal temperature, resulting in an appearance defect. This is a problem of thermal distortion. Such a deformed area has a steeper change on the surface than the peripheral design surface and is likely to be conspicuous to people. Hence, the deformed area is noticeable as a faulty distortion.

Such an appearance defect as above is more likely to be caused as the rigidity decreases due to a thinner outer panel component and thus is a problem when the automobile weight is reduced.

As conventional methods for predicting an appearance defect of an automotive panel component due to thermal deformation of a mastic, technologies are disclosed in PTL 1 and PTL 2.

Patent Document 1 discloses setting the thermal expansion coefficient of a mastic as a material condition of the mastic for analysis. Patent Document 1 also discloses determining distortion (sink mark) due to an automotive mastic adhesive by heating or cooling. Patent Document 1, however, discloses no detailed description of the simulation of thermal deformation of a mastic, and the specific method of CAE is unclear.

Patent Document 2 discloses setting a model to a cylindrical shape as the mastic model and setting the elastic coefficient and the thermal expansion coefficient as the mastic material conditions. Patent Document 2 also discloses a method of analyzing the distortion or stress of a mastic itself bound to two components. In Patent Document 2, the model of an adhesive is set as a cylindrical shape; the contour shape of faces adhering to two components is a circular shape; and the stress or distortion generated by mastic thermal deformation and transmitted to the two components can be reproduced. Examples in Patent Document 2 disclose that the elastic coefficient at mastic expansion differs from that at mastic shrinkage. Patent Document 2, however, does not disclose that the elastic coefficient of a mastic is changed in response to temperature change of the mastic.

### Citation List

### Patent Document

Patent Document 1: JP 2019-59887 A
Patent Document 2: JP 6747410 B

### Summary of Invention

### Technical Problem

As in Patent Document 2, analysis using a cylindrical shape as the mastic model is not so complicated for an individual compact component. However, for automotive outer panel components typically having a large shape or for large scale models such as a full automobile body, mesh partitioning for setting a FEM model is very complicated. In addition, a FEM model is changed very extensively to change the component shape or the mastic application amount. This may unfortunately lead to delay in developing automobiles.

In a conventional analysis, a mastic and the node of a component are completely made to correspond, and thus the adhesion is more strongly expressed than it actually is. In an actual temperature rise process, a mastic is creamy and thus has almost no binding force to a panel component or a reinforcing component.

Studies of the inventors, however, have revealed the following problems when a component is also thermally deformed. In other words, by the CAE technology as disclosed in PTLS 1 and 2, the binding force of a mastic to an outer panel component or a reinforcing component may be stronger than the binding force of an actual component (actual joint structure). Accordingly, deformation is strongly bound at a mastic adhesion portion when an outer panel component expands. On this account, the analysis erroneously induces a panel component to cause buckling, which does not occur in an actual component.

The present invention has been made under the above circumstances. The present invention is intended to enable analysis of the behavior of a panel component in the plate thickness direction with higher accuracy by bringing the binding state of an elastic adhesive close to the actual state.

### Solution to Problem

To solve the problems, an aspect of the present invention is a panel component behavior analysis method including modeling a joint structure in which a panel component and a reinforcing component facing together are connected through one or more elastic adhesives and analyzing the behavior of the panel component by finite element analysis using a computer. In the method, from actually measured heating and cooling data of the elastic adhesive, an elastic coefficient including change in elastic coefficient of the elastic adhesive in response to temperature change and using temperature as a parameter is determined, the determined elastic coefficient using temperature as a parameter and a thermal expansion coefficient are set as physical property conditions of the elastic adhesive, and the behavior of the panel component is analyzed under a temperature change condition in which a temperature change is applied to the joint structure in a previously-set temperature range.

It has been thought that a panel component itself returns to the original state even after a heating and cooling process. Studies of the inventors, however, have revealed that to detect a surface sink mark on a large size and thin panel component with high accuracy, the thermal deformation of the panel component itself is also preferably considered.

On this account, as the analysis condition of physical properties of at least the panel component of the panel component and the reinforcing component, a thermal deformation parameter is preferably set. The thermal deformation parameter is preferably an indicator representing that deformation is easier at a high temperature than at a low temperature.

Another aspect of the present invention is a panel component behavior analysis device including a model generation unit configured to model a joint structure in which a panel component and a reinforcing component facing together are connected through one or more elastic adhesives, to generate an analytical model, and an analysis unit configured to analyze the analytical model of the joint structure by finite element analysis using a computer to analyze the behavior of the panel component. In the model generation unit, at least an elastic coefficient and a thermal expansion coefficient are set as setting conditions of physical properties of the elastic adhesive in the analytical model, and the elastic coefficient to be set is set as a value that changes in response to temperature change and uses temperature as a parameter. The analysis unit is configured to execute processing of analyzing the behavior of the panel component under a temperature change condition in which a temperature change is applied to the joint structure in a previously-set temperature range.

Another aspect of the present invention is a panel component behavior analysis program for having a computer perform a model generation step of modeling a joint structure in which a panel component and a reinforcing component facing together are connected through one or more elastic adhesives, in a set setting condition to generate an analytical model and an analysis step of analyzing the analytical model of the joint structure by finite element analysis to analyze the behavior of the panel component. In the model generation step, at least an elastic coefficient and a thermal expansion coefficient are set as setting conditions of physical properties of the elastic adhesive, processing of generating the analytical model is executed under the set conditions, and the elastic coefficient to be set is set as a value that changes in response to temperature change and uses temperature as a parameter. In the analysis step, processing of analyzing the behavior of the panel component is executed under a temperature change condition in which a temperature change is applied to the joint structure in a previously-set temperature range.

### Advantageous Effects of Invention

According to an aspect of the present invention, the binding state of a panel component by an elastic adhesive can be brought closer to the actual state. According to an aspect of the present invention, hence, the behavior of a panel component in the plate thickness direction can be analyzed with higher accuracy. As a result, according to an aspect of the present invention, for example, the outer shape of an automotive outer panel component can be evaluated by analysis with higher accuracy.

### Brief Description of Drawings

FIG. 1 is a view illustrating a processing configuration pertaining to an embodiment of the present invention.
FIG. 2 is a view illustrating an example change in elastic modulus of an adhesive in response to temperature change during temperature rise/temperature drop.
FIG. 3 is a view illustrating an example flow of a behavior analysis program.
FIGS. 4A and 4B are views illustrating an analytical model (FEM model) of a joint structure connected through an elastic adhesive in an example. FIG. 4A is a perspective view of the whole structure, and FIG. 4B is a perspective view where the panel component is removed.
FIG. 5 is a view (side view) illustrating an analytical model in an example.
FIGS. 6A and 6B are exploded views illustrating an elastic adhesive analytical model (mesh segmentation) in an example; FIG. 6A is a perspective view of the whole model; and FIG. 6B is a perspective view where the panel component is removed.
FIG. 7 is a view illustrating an example mesh structure of an elastic adhesive model in an example.

### Description of Embodiments

Embodiments of the present invention will now be described with reference to drawings.

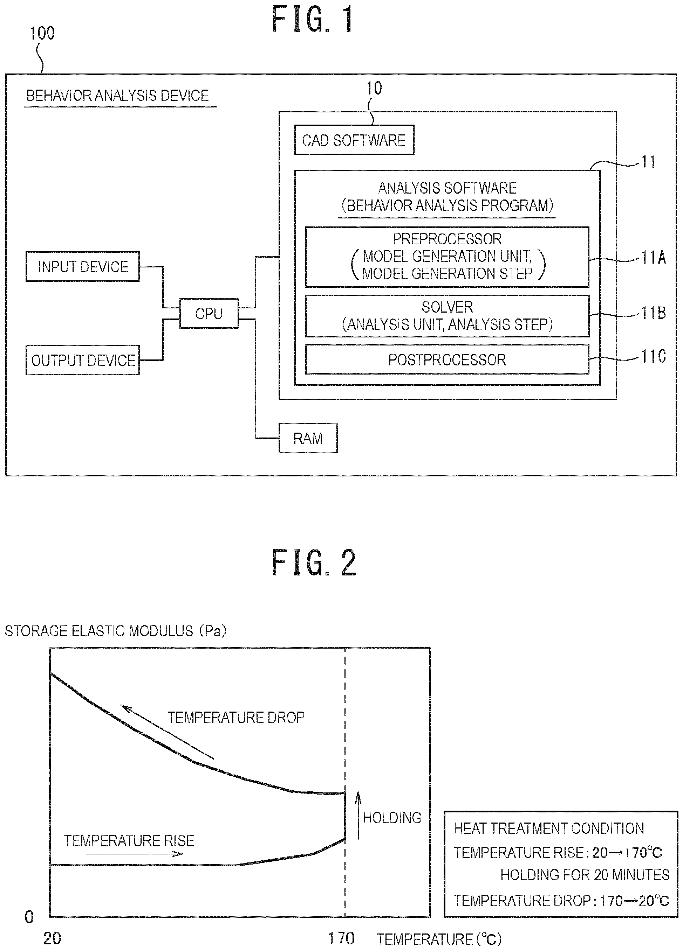

A structure analysis using a computer of the embodiment is CAE analysis using the finite element method. A behavior analysis device 100 in the embodiment includes, as with a conventional analysis device, CAD software 10 and analysis software 11 as software (programs) as illustrated in FIG. 1. The analysis software 11 include, for example, a preprocessor 11A, a solver 11B, and a postprocessor 11C. The analysis software 11 constitutes a behavior analysis program. The preprocessor 11A constitutes a model generation unit and a model generation step. The solver 11B constitutes an analysis unit and an analysis step.

The basic configuration or the basic processing of the CAD software 10 and the analysis software 11 may be a known configuration or known processing.

By using the CAD software 10, the following information is set on the basis of input information. The information is, for example, the following information items (1) to (3):
(1) Shape data information and physical property information of two components facing together at a predetermined distance;
(2) Shape data information and physical property information of an elastic adhesive provided between the two components; and
(3) Arrangement information of the components

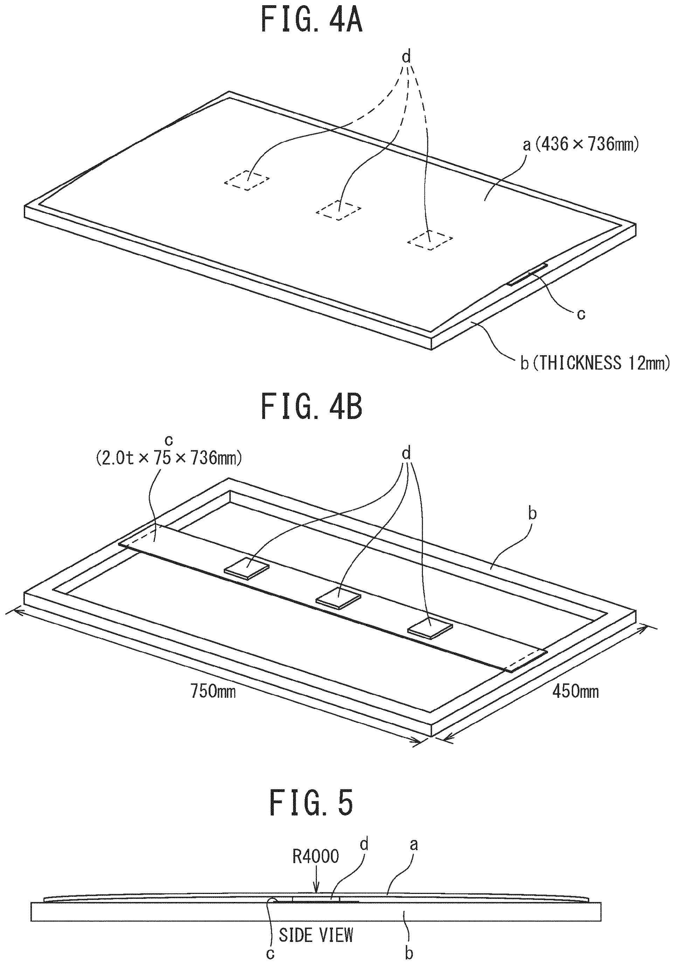

In the present embodiment, the two components include a panel component and a reinforcing component placed at the back side of the panel component (see FIGS. 4A and 4B).

In the present embodiment, the panel component may be an outer panel component such as a door panel or a roof panel of an automobile. The elastic adhesive to be analyzed is preferably a thermally deformable elastic adhesive such as a mastic adhesive.

The preprocessor 11A creates (generates) an analytical model (FEM model) of a joint structure from the following information. The information includes, for example, analysis conditions including the above shape data information, mesh preparation conditions, physical property definition (material definition), boundary conditions, binding conditions (fixing manner), and loading conditions.

The joint structure has a structure in which a panel component and a reinforcing component facing together are connected through one or more elastic adhesives. Hence, in the analytical model, a joint structure in which a panel component and a reinforcing component facing together are connected through one or more elastic adhesives is modeled and set. In the present embodiment, such an outer panel component as above is assumed, and thus a plurality of elastic adhesives are provided between a panel component and a reinforcing component.

### (Model of elastic adhesive)

Of the above FEM models, the shape model of an elastic adhesive is a shape model consisting of a rectangular parallelepiped in consideration of easy setting. In the shape model, the peripheral contour shape of each adhesive surface (adhesion portion) of an elastic adhesive to a panel component and a reinforcing component is a rectangular shape.

Each shape model of elastic adhesives is set with a plurality of solid elements in consideration of the set thickness or the dimensions of an adhesive surface.

In the present embodiment, as physical property conditions of an elastic adhesive, at least an elastic coefficient and a thermal expansion coefficient are set. As a physical property condition of an elastic adhesive, a Poisson's ratio may be set.

### [Elastic coefficient to be set]

In the present embodiment, to determine the elastic coefficient as a setting condition of an elastic adhesive, two pieces of data regarding change in elastic coefficient of an elastic adhesive are actually measured. The first actually measured data is actually measured data regarding change in elastic coefficient of an elastic adhesive in response to temperature rise when an intended elastic adhesive is heated in a previously-set temperature range. The second actually measured data is actually measured data regarding change in elastic coefficient of an elastic adhesive in response to temperature drop in a previously-set temperature range.

The previously-set temperature range is, for example, a temperature range that is supposedly input to a joint structure in a coating process while the heat history in the coating process in an automobile factory is assumed. The temperature change condition to be set is, for example, in a temperature range from -10°C to 250°C. The temperature range is preferably 20°C to 180°C.

From the actually measured heating and cooling data, an elastic coefficient consisting of changing elastic coefficient values of an elastic adhesive in response to temperature change and using temperature as a parameter is determined.

Specifically, a function of elastic coefficient consisting of change in elastic coefficient in response to temperature rise is determined where temperature is the parameter. The function of elastic coefficient consisting of change in elastic coefficient in response to temperature drop is determined where temperature is the parameter. The determined elastic coefficient using temperature as the parameter is set as the analysis condition of an elastic adhesive.

When the temperature change condition to be set as the analysis condition is a condition in which heat treatment is performed while a temperature rise process and a temperature drop process are performed as a series of processes, the following setting is performed. In other words, according to the heat treatment, a change in elastic coefficient of an elastic adhesive in response to a temperature change is determined, and is set as the analysis condition.

An example of the determined change in elastic coefficient in response to temperature change is illustrated in FIG. 2. The elastic coefficient using temperature as the parameter is then calculated as a table or a function and is set.

As for actually measured heating and cooling data, each of the actually measured data at heating and the actually measured data at cooling is acquired in a plurality of conditions and is stored. The plurality of conditions include temperature change conditions such as a temperature increase rate and a temperature rise start temperature. On the basis of actually measured data in conditions close to the analysis, an elastic coefficient using temperature set for analysis as the parameter may be determined.

Alternatively, on the basis of temperature change conditions used for analysis, heating and cooling data is actually measured, and an elastic coefficient using temperature as the variable may be determined. For each temperature change direction (each of temperature rise and temperature drop), that is, in consideration of a temperature change direction, an elastic coefficient using temperature as the variable is needed to be determined.

As apparent from FIG. 2, as for change in elastic coefficient in response to temperature change, the elastic coefficient becomes larger at a lower temperature when the temperature decreases. On this account, the elastic coefficient may be a constant value during temperature rise, but only the elastic coefficient during temperature drop may be a function using temperature as a parameter. In other words, the elastic coefficient during temperature drop may be set as values increasing continuously or step-by step in two or more steps in response to temperature drop.

The elastic coefficient in response to temperature change is preferably set such that the elastic coefficient changes step-by-step in response to temperature change in consideration of easier analysis.

### [Thermal expansion coefficient to be set]

As the thermal expansion coefficient to be set, the inherent value of an elastic adhesive may be used, but a value determined by an experiment or the like may be used as the thermal expansion coefficient. The thermal expansion coefficient may also be set as a value that changes in response to temperature change.

### (Models of panel component and reinforcing component)

The shape models of a panel component and a reinforcing component are set by inputting the shape data of products.

The physical properties of the panel component and the reinforcing component may be set on the basis of the material data of products.

For the setting, as the analysis condition of physical properties of at least the panel component of the panel component and the reinforcing component, a thermal deformation parameter is preferably set. The thermal deformation parameter is an indicator representing that deformation is easier at a high temperature than at a low temperature.

For example, the elastic coefficient of a panel component is set as a value that changes in response to temperature change (a value of elastic coefficient decreasing continuously or step-by step as the temperature increases). As the analysis condition of physical properties of a panel component, a thermal deformation parameter is set. The elastic coefficient of a panel component may be set at a constant value that is the value of elastic coefficient at a certain temperature. The same is applied to the reinforcing component.

### [Additional conditions]

In the present analysis, a FEM model in which a panel component, a reinforcing component, and an elastic adhesive included in a joint structure are each deformed by heat is used. Accordingly, in the FEM model in the present analysis, the elastic adhesive stresses the panel component and the reinforcing component while each component deforms. The mastic deformation is set as a thermoelastic model. The panel component and the reinforcing component are set as a thermoelastic model or a thermo-elastic-plastic model. Each component is so set as to be deformed by heating.

Meshes of each of the elastic adhesive, the panel component, and the reinforcing component can be independently set.

For adhesion of each elastic adhesive to the panel component and to the reinforcing component, each elastic adhesive is interlocked with the panel component and the reinforcing component with degrees of freedom of rotation and translation.

As described above, each elastic adhesive is set as a rectangular solid. Accordingly, for the meshes of each elastic adhesive, the mesh size and the mesh number can be changed according to the application amount of the elastic adhesive. As a result, the stress generated by expansion or shrinkage of the elastic adhesive itself in response to temperature change can be transferred to the panel component and the reinforcing component. The present embodiment enables reproduction of the adhesion state in a joint structure.

The mesh sizes of a panel component and a reinforcing component can be freely set regardless of the size or the mesh number of an elastic adhesive model. Hence, even when the arrangement of elastic adhesives or the like is changed, the meshes of a panel component or a reinforcing component are not needed to be reset. This can significantly reduce the man-hour for recreating the FEM model.

The two components are binding conditions binding the adhesive surfaces of the elastic adhesive.

As the temperature change conditions in the FEM analysis, an estimated heat change condition or a heat change condition due to heat generated by an adhesive itself is set.

The stress or the distortion estimated to be generated in the elastic adhesive itself by binding the distortion (expansion and shrinkage) of the elastic adhesive itself in response to temperature change is then analyzed. The distortion/stress generated in the elastic adhesive itself is then input through the adhesive surfaces to the panel component and the reinforcing component, and the behavior of the panel component in the plate thickness direction can be analyzed.

The solver 11B executes analysis of a set analytical model (a shape model for FEM analysis) in a set thermal deformation state. The analysis by the finite element method may be either an implicit method or an explicit method but is preferably a static implicit method from the viewpoint of analysis accuracy. Both shrinkage and expansion generated in an expansion process and a cooling process in response to heat change in an actual heating process may be considered. Depending on the purpose, only expansion or shrinkage may be analyzed.

The postprocessor 11C executes processing for displaying the behavior analysis result of stress change or out-of-plane deformation of a panel component analyzed by the solver 11B. For example, the postprocessor executes processing of displaying, for example, a figure of stress distribution or a deformation in the plate thickness direction generated in a bound panel component as a three-dimensional model or the like.

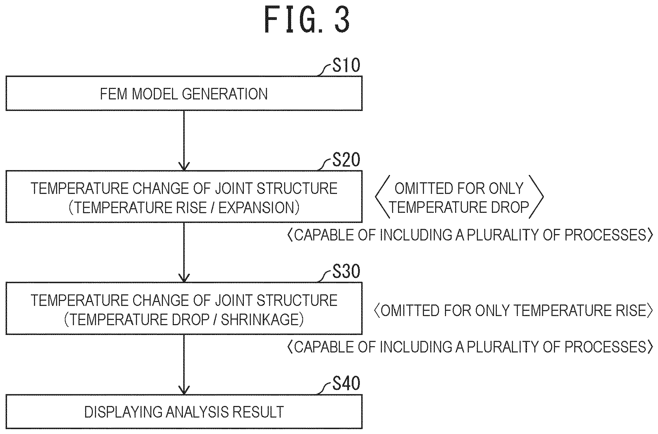

A processing example of the analysis software 11 is illustrated in FIG. 3.

The processing example illustrated in FIG. 3 is a FEM analysis flow example for analysis in a thermal deformation state.

In the example in FIG. 3, in step S10, the preprocessor 11A sets a FEM model. The step S10 constitutes a model generation step. In the set setting conditions, a joint structure in which a panel component and a reinforcing component facing together are connected through one or more elastic adhesives is modeled to generate an analytical model. In the model generation step, for example, at least the elastic coefficient and the thermal expansion coefficient are set as setting conditions of physical properties of an elastic adhesive. In the set conditions, processing of generating an analytical model is then executed. The elastic coefficient to be set is set as a value that changes in response to temperature change and uses temperature as a parameter.

In the model generation step, a thermal deformation parameter may be set as a physical property condition of at least the panel component of the panel component and the reinforcing component. In the set conditions, processing of generating an analytical model may be executed. The thermal deformation parameter to be set is set as a value at which a component is more easily deformed at a high temperature than at a low temperature. For example, the elastic coefficient as the physical property condition of a panel component is a function using temperature as the parameter. The thermal deformation parameter is then set such that the elastic coefficient is lower as the temperature increases, at a high temperature.

In step S20, when the solver 11B determines that the heating condition is heating not less than a predetermined temperature, expansion expected to be generated in the elastic adhesive by the heating is calculated. The tensile stress or the shape change (expansion) generated in the elastic adhesive itself when the expansion is bound is then analyzed.

For the panel component and the reinforcing component, input of the stress from the elastic adhesive on the adhesive surface and analysis of the thermal deformation of the panel component and the reinforcing component are executed. The stress distribution or the shape change in each component is then analyzed.

In the step, when the thermal deformation parameters are set for two components, the stress distribution or the shape change in each component is analyzed while the thermal deformation parameters are also considered.

In step S30, when determining that a cooling condition occurs, the solver 11B calculates the shrinkage generated in the elastic adhesive in the cooling condition. The compressive stress or the shape change (compression) generated in the elastic adhesive itself when the shrinkage is bound is then analyzed.

For the panel component and the reinforcing component, input of the stress from the elastic adhesive on the adhesive surface and analysis of the thermal deformation of the panel component and the reinforcing component are executed. The stress distribution or the shape change in each component is then analyzed.

In the step, when the thermal deformation parameter is set for each component, the stress distribution or the shape change in each component is analyzed while the thermal deformation parameters are also considered.

Step S20 and step S30 constitute an analysis step. The analysis step executes processing of analyzing the behavior of a panel component by finite element analysis of the analytical model of a joint structure generated in step S10. The analysis step in the embodiment executes processing of analyzing the behavior of a panel component in a temperature change condition in which a temperature change is applied to a joint structure in a previously-set temperature range.

In the step, as the temperature change condition, a temperature rise process of heating the joint structure and a temperature drop process of cooling the joint structure may be included. In this case, as the elastic coefficient to be set, the elastic coefficient in the temperature drop process may be set as a value that continuously or intermittently increases as the temperature decreases. The elastic coefficient in the temperature rise process may be set as a constant value.

In the step, at least one process of the two processes of the temperature rise process and the temperature drop process in the analysis step may be divided along the temperature change direction into two or more processes, and the processing may be executed. In this case, by setting different values as the elastic coefficient to be set for the respective two or more divided processes, the elastic coefficient condition that changes in response to temperature change may be set.

In step S40, the postprocessor 11C executes, on the basis of the analysis by the solver 11B, processing of displaying the distortion/stress behavior state or the behavior of out-of-plane deformation in the thickness direction generated in the panel component.

In the step, the shape evaluation method of a panel component in the plate thickness direction, for example, evaluates a difference between the initial shape of a panel component and the final shape of a panel component after shrinkage. For example, a conventional method of evaluating surface quality, such as the amount of displacement and the degree of surface change by second-order differentiation, is used to compare a difference for evaluation.

The present analysis may be performed, for example, in an analysis condition in which the self-weight load is applied to the initial shape of a panel component.

### (Action and the like)

According to the present embodiment, an actually measured elastic coefficient using temperature as a parameter and a thermal expansion coefficient are set as the model information (physical property condition) of an elastic adhesive. Accordingly, the behavior by deformation of an elastic adhesive itself is also considered. A volume change of an elastic adhesive itself due to a temperature change or a stress associated with the volume change are accurately determined. As a result, the change of a panel component in the plate direction due to a heat change can be accurately evaluated.

In the present embodiment, not only the stress from an elastic adhesive due to a temperature change of the elastic adhesive is input to a panel component but also a thermal deformation parameter is given to a panel component. By also considering the thermal deformation of a panel component itself due to a temperature change, the change of the panel component in the plate direction can be evaluated with higher accuracy.

In the present embodiment, a thermal deformation parameter may be given to a reinforcing component, and the thermal deformation of the reinforcing component itself due to a temperature change may also be considered. However, a reinforcing component typically has a higher rigidity than a panel component, and thus the thermal deformation parameter is not necessarily set for a reinforcing component.

The present embodiment will be more specifically described.

In the present embodiment, physical properties of an elastic adhesive to be input as the analysis condition are at least thermal expansion coefficient and elastic modulus.

When applied (at application), the elastic adhesive is a creamy viscous substance and thus has a small force to bind a panel component. In contrast, the elastic adhesive has such characteristics as to foam by baking heat treatment at coating and to change into a rubber-like viscoelastic material. Hence, the elastic adhesive is thought to have different physical properties to be input when the temperature increases and decreases. On this account, for physical properties of the elastic adhesive, physical property values, which differ when the temperature increases and decreases, are actually measured and are set as the analysis condition. This setting is effective in bringing the analysis closer to the actual conditions.

To determine the physical property values, for example, it is effective to use a viscoelasticity measuring instrument or the like and to actually measure the expansion or shrinkage behavior, a change in elastic modulus, or the like in temperature rise, temperature hold, and temperature drop processes in a temperature pattern of heat treatment.

FIG. 2 illustrates an example of the actually measured change in elastic coefficient (exactly storage elastic modulus due to a viscoelastic material) of an elastic adhesive. As apparent from FIG. 2, the elastic coefficient value is low during temperature rise. The elastic coefficient value increases during isothermal holding and markedly increases in behavior in the temperature drop process. The behavior varies with the types of elastic adhesives and thus is essential information to specify the physical property value. By reflecting the complicated behavior in CAE, more accurate prediction results of the behavior (distortion or stress change) of an elastic adhesive can be obtained.

A panel component and a reinforcing component to which an elastic adhesive adheres also expands or shrinks due to heat treatment. At expansion or shrinkage, if a portion to be bound, such as the adhesion portions of an elastic adhesive or a hem, is arranged in a vicinity of the panel component or the reinforcing component, the panel component causes buckling, and the portion causes plastic deformation. Accordingly, a defect called thermal distortion may be caused, unfortunately.

Panel components and reinforcing components are typically made of iron or aluminum. As analysis conditions in CAE, the thermal expansion coefficient, the elastic modulus, and the Poisson's ratio inherent in each metal are input. The coating baking temperature is about 200°C, and thus the above parameters can be considered to have substantially no temperature dependence on temperature. Hence, a constant value may be input in the temperature rise process and the temperature drop process in CAE.

Studies of the inventors, however, have revealed the following findings. In other words, for a larger panel component having a smaller plate thickness, the temperature dependence of a physical property value on temperature is required to be considered as a physical property condition of the panel component.

Hence, the thermal deformation parameter may be given as at least one physical property value of the physical properties of at least the panel component of the panel component and the reinforcing component. For example, as a temperature variable, the elastic modulus of a panel component is so set as to be lower at a high temperature than at a low temperature. The thermal deformation parameter may then be given. The value may be determined, for example, by actual measurement.

As described above, according to the present embodiment, when the following information is available, an appearance defect due to thermal deformation can be predicted without producing an automotive body or a component. The information is component shape data, plate thickness or strength data, physical property values or expansion/shrinkage measurement data of an elastic adhesive, and assembly information. The information enables previous countermeasures against an appearance defect, such as the type of an elastic adhesive, the application position, the application amount, the shape (curvature) of an outer panel component, the shape of a reinforcing component, and the plate thickness.

### (Alternative embodiment)

In the above embodiment, for each of the temperature rise process and the temperature drop process, the elastic coefficient that is determined from real data, uses temperature as a parameter, and changes in response to temperature change is set.

Each of the temperature rise process and the temperature drop process is divided along the temperature change direction into a plurality of processes. For each divided process, a constant elastic coefficient or thermal expansion coefficient may be individually set on the basis of the above real data, and the analysis may be performed. At least one physical property value of the elastic coefficient, the thermal expansion coefficient, and the Poisson's ratio as physical properties of an elastic adhesive may be individually set for each divided process.

Physical property values of a panel component or a reinforcing component may be individually set for each divided process.

For example, a temperature rise process from 20°C to 170°C is divided into two processes of a first process from 20°C to 120°C and a second process from 120°C to 170°C. Physical properties for each of the two processes are input from the respective expansion amounts. Accordingly, more actual nonlinear expansion/shrinkage behavior of an elastic adhesive with respect to temperature can be easily represented as a linear correlation with high accuracy. The same is applicable to the temperature drop process.

As described above, the elastic coefficient significantly changes when the temperature decreases as apparent from FIG. 2, and thus a constant elastic coefficient is set in the temperature rise process. Only the temperature drop process may be divided along the temperature change direction into two or more processes, and different elastic coefficients may be set for the respective divided temperature ranges. The different elastic coefficients may each be a constant value.

According to the alternative embodiment, analysis conditions are more easily set than when the elastic coefficient is continuously changed in response to temperature change.

### (Others)

The disclosure can include the following configurations.
(1) A panel component behavior analysis method including modeling a joint structure in which a panel component and a reinforcing component facing together are connected through one or more elastic adhesives and analyzing the behavior of the panel component by finite element analysis using a computer, in the method
   from actually measured heating or cooling data of the elastic adhesive, an elastic coefficient including an elastic coefficient value of the elastic adhesive changing in response to temperature change and using temperature as a parameter is determined,
   the determined elastic coefficient using temperature as a parameter and a thermal expansion coefficient are set as physical property conditions of the elastic adhesive, and
   the behavior of the panel component is analyzed in a temperature change condition in which a temperature change is applied to the joint structure in a previously-set temperature range.
(2) As the temperature change condition, a temperature rise process of heating the joint structure and a temperature drop process of cooling the joint structure are included,
   the elastic coefficient in the temperature drop process is set as the elastic coefficient using temperature as a parameter, and a constant value is set as the elastic coefficient in the temperature rise process.
(3) The panel component behavior analysis method according to claim 1 or claim 2, wherein
   as a physical property analysis condition of at least the panel component of the panel component and the reinforcing component, a thermal deformation parameter is set, and the thermal deformation parameter is an indicator representing that deformation is easier at a high temperature than at a low temperature.
(4) As the temperature change condition, a temperature rise process of heating the joint structure and a temperature drop process of cooling the joint structure are included, at least one process of the two processes is divided along the temperature change direction into two or more processes, and by setting different values as the elastic coefficient for the respective two or more divided processes, a condition of change in elastic coefficient of the elastic adhesive in response to temperature change is set.
(5) The panel component behavior to be analyzed is a stress distribution or a shape change.
(6) The shape model of the elastic adhesive is a rectangular parallelepiped.
(7) The panel component is an automotive panel.
(8) By analysis of the panel component behavior analysis method in the disclosure, an appearance defect of an automotive panel component due to thermal deformation is predicted.
(9) A panel component behavior analysis device including a model generation unit configured to model a joint structure in which a panel component and a reinforcing component facing together are connected through one or more elastic adhesives, to generate an analytical model and an analysis unit configured to analyze the analytical model of the joint structure by finite element analysis using a computer to analyze the behavior of the panel component, in the device
   in the model generation unit, at least an elastic coefficient and a thermal expansion coefficient are set as setting conditions of physical properties of the elastic adhesive in the analytical model,
   the elastic coefficient to be set is set as a value that changes in response to temperature change and uses temperature as a parameter, and
   the analysis unit is configured to execute processing of analyzing the behavior of the panel component in a temperature change condition in which a temperature change is applied to the joint structure in a previously-set temperature range.
(10) As the temperature change condition, a temperature rise process of heating the joint structure and a temperature drop process of cooling the joint structure are included,
   as the elastic coefficient to be set, the elastic coefficient in the temperature drop process is set as a value that continuously or intermittently increases as the temperature decreases, and the elastic coefficient in the temperature rise process is set as a constant value.
(11) In the model generation unit, a thermal deformation parameter is set as a physical property condition of at least the panel component of the panel component and the reinforcing component in the analytical model, and the thermal deformation parameter to be set is set as a value at which a component is more easily deformed at a high temperature than at a low temperature.
(12) As the temperature change condition, a temperature rise process of heating the joint structure and a temperature drop process of cooling the joint structure are set, at least one process of the two processes is divided along the temperature change direction into two or more processes, and by setting different values as the elastic coefficient to be set for the respective two or more divided processes, the elastic coefficient condition that changes in response to temperature change is set.
(13) The panel component behavior to be analyzed is a stress distribution or a shape change.
(14) The shape model of the elastic adhesive is a rectangular parallelepiped.
(15) A panel component behavior analysis program for having a computer perform a model generation step of modeling a joint structure in which a panel component and a reinforcing component facing together are connected through one or more elastic adhesives, in a set setting condition to generate an analytical model and an analysis step of analyzing the analytical model of the joint structure by finite element analysis to analyze the behavior of the panel component, in the program
   in the model generation step, at least an elastic coefficient and a thermal expansion coefficient are set as setting conditions of physical properties of the elastic adhesive, processing of generating the analytical model is executed in the set conditions,
   the elastic coefficient to be set is set as a value that changes in response to temperature change and uses temperature as a parameter, and
   in the analysis step, processing of analyzing the behavior of the panel component is executed in a temperature change condition in which a temperature change is applied to the joint structure in a previously-set temperature range.
(16) As the temperature change condition, a temperature rise process of heating the joint structure and a temperature drop process of cooling the joint structure are included,
   as the elastic coefficient to be set, the elastic coefficient in the temperature drop process is set as a value that continuously or intermittently increases as the temperature decreases, and the elastic coefficient in the temperature rise process is set as a constant value.
(17) In the model generation step, a thermal deformation parameter is set as a physical property condition of at least the panel component of the panel component and the reinforcing component, processing of generating the analytical model is executed in the set condition, and
   the thermal deformation parameter to be set is set as a value at which a component is more easily deformed at a high temperature than at a low temperature.
(18) As the temperature change condition, a temperature rise process of heating the joint structure and a temperature drop process of cooling the joint structure are included, at least one process of the two processes is divided along the temperature change direction into two or more processes, and by setting different values as the elastic coefficient to be set for the respective two or more divided processes, the elastic coefficient condition that changes in response to temperature change is set.
(19) The panel component behavior to be analyzed is a stress distribution or a shape change.
(20) The shape model of the elastic adhesive is set as a rectangular parallelepiped.

### Examples

Examples pertaining to the embodiments will next be described.

The analytical model of a joint structure in the present example includes models a to c as illustrated in FIGS. 4A and 4B. The model a is a model simulating a panel component. The model b is a model of a frame supporting (binding) the outer periphery of the model a. The model c is a model simulating a reinforcing component. The model in the example includes a plurality of models d simulating elastic adhesives connecting (binding) the model a and the model c. The elastic adhesive is assumed to be a mastic.

The model a was a model simulating a D-shaped outer panel component 436 × 736 mm square in projection. Specifically, the model a was so set as to have a side view as illustrated in FIG. 5. In other words, the model a was assumed to be a panel component with R4000 in one direction intended for an automotive roof panel component, and the orthogonal direction thereof is set as a flat plane.

The outer panel of an actual automobile has a plate thickness of about 0.55 mm to 0.70 mm. In the example, from the range, six types of plate thicknesses were set for the model a.

The model b was a rigid body. For the models a, c, and d, physical properties of the respective materials were input. For the models a and c assuming iron, the density was set at 7.8 g/cm3, the Young's modulus was set at 210 GPa, and the thermal expansion coefficient was set at 11.7 × 10⁻⁶/°C·m. The models a and c were each a thermoelastic or thermo-elastic-plastic FEM model. For the model d, physical property values of mastic as an elastic adhesive were set. Specifically, for the model d, a thermoelastic FEM model was used. At expansion, the thermal expansion coefficient was set at 1.821 × 10⁻³/°C·m, and the average Young's modulus (elastic coefficient) was set at 30 kPa. At shrinkage, the thermal expansion coefficient was set at 0.886 × 10⁻³/°C·m, and the average Young's modulus (elastic coefficient) was set at 200 kPa.

In the example, the elastic coefficient was changed in accordance with the change rate in response to temperature change illustrated in FIG. 2. In the example, the temperature range was divided into two temperature ranges (a temperature range from 170°C to 120°C and a temperature range from 120°C to 20°C), and different elastic coefficients were set for the respective two temperature ranges. As apparent from FIG. 2, the change in elastic modulus in response to temperature change is larger when the temperature decreases. Hence, the analysis condition may be so set as to change the elastic coefficient in response to temperature change only when the temperature decreases.

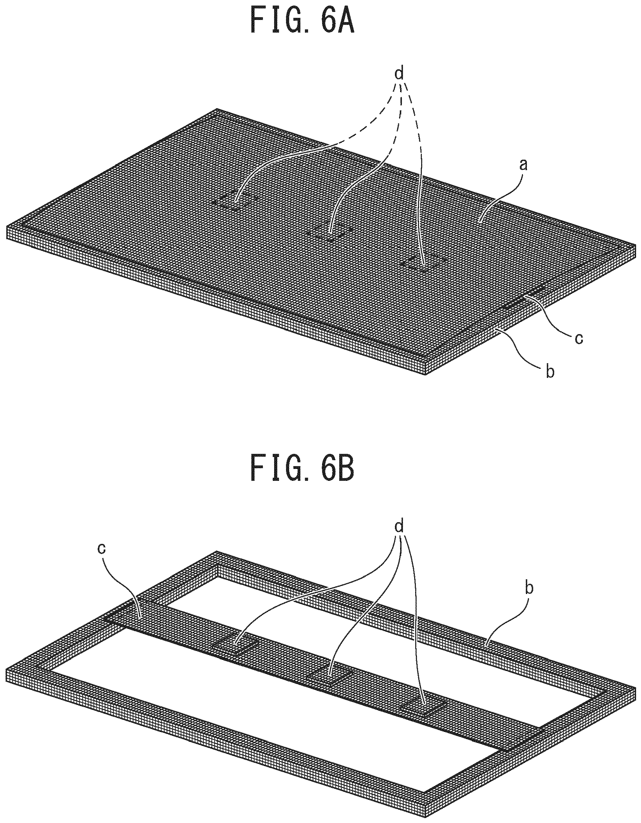

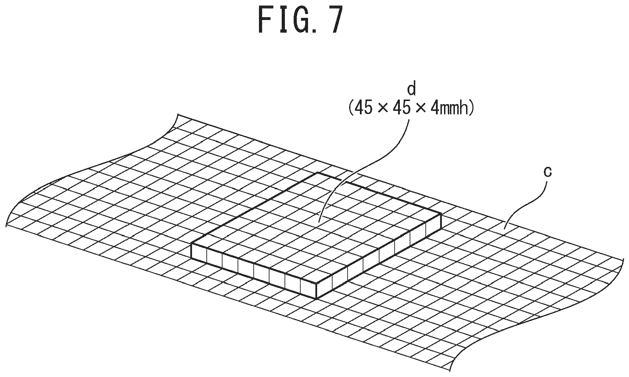

Each model was divided into meshes as illustrated in FIGS. 6A and 6B. The model d of the elastic adhesive was divided into solid elements as illustrated in FIG. 7. For the analysis, the static implicit method was used.

The coating baking temperature of an automobile was assumed at 170°C. All elements of the FEM model representing the joint structure were analyzed while the temperature was increased from 20°C to 170°C and then decreased from 170°C to 20°C. Switching from the temperature rise to the temperature drop was performed by coupled analysis in which the panel component shape and the stress distribution were succeeded.

To verify the analysis results, a test jig having the same dimensions and the same constitution as the model was actually prepared and subjected to experiments.

The outer surface evaluation (surface sink mark evaluation) of the panel component was performed by reflecting, in the panel component surface, a stripe pattern projected on a wall by a projector. The line distortion degree of the stripe pattern was then visually observed and evaluated.

From the evaluation result, it was ascertained that the analysis result of the outer shape of the panel component determined by the analysis matched the visual observation result of the panel component in the actual experiment of the joint structure component. This indicates that the FEM model of the present invention is a technology effective in predicting an appearance defect of an outer panel component due to thermal deformation.

The entire contents of JP 2021-146242 A (filed on September 8, 2021), to which the present application claims priority, are hereby incorporated by reference into the disclosure. Although the present invention has been described with reference to a limited number of embodiments, the scope of rights is not limited thereto, and modifications of each embodiment on the basis of the above disclosure will be obvious to those skilled in the art.

### Reference Signs List

- 100: behavior analysis device
- 10: CAD software
- 11: analysis software (behavior analysis program)
- 11A: preprocessor (model generation unit, model generation step)
- 11B: solver (analysis unit, analysis step)
- 11C: postprocessor
- a: panel component model
- b: frame model
- c: reinforcing component model
- d: elastic adhesive model

## Claims

1. A panel component behavior analysis method comprising:
modeling a joint structure in which a panel component and a reinforcing component facing together are connected through one or more elastic adhesives; and
analyzing behavior of the panel component by finite element analysis using a computer, wherein
from actually measured heating and cooling data of the elastic adhesive, an elastic coefficient including an elastic coefficient value of the elastic adhesive changing in response to temperature change and using temperature as a parameter is determined,
the determined elastic coefficient using temperature as a parameter and a thermal expansion coefficient are set as physical property conditions of the elastic adhesive, and
the behavior of the panel component is analyzed under a temperature change condition in which a temperature change is applied to the joint structure in a previously-set temperature range.

2. The panel component behavior analysis method according to claim 1, wherein as the temperature change condition, a temperature rise process of heating the joint structure and a temperature drop process of cooling the joint structure are included,
the elastic coefficient in the temperature drop process is set as the elastic coefficient using temperature as a parameter, and a constant value is set as the elastic coefficient in the temperature rise process.

3. The panel component behavior analysis method according to claim 1 or claim 2, wherein as a physical property analysis condition of at least the panel component of the panel component and the reinforcing component, a thermal deformation parameter is set, and the thermal deformation parameter is an indicator representing deformation being easier at a high temperature than at a low temperature.

4. The panel component behavior analysis method according to any one of claim 1 to claim 3, wherein as the temperature change condition, a temperature rise process of heating the joint structure and a temperature drop process of cooling the joint structure are included, at least one process of the two processes is divided along a temperature change direction into two or more processes, and by setting different values as the elastic coefficient for the respective two or more divided processes, a condition of change in elastic coefficient of the elastic adhesive in response to temperature change is set.

5. The panel component behavior analysis method according to any one of claim 1 to claim 4, wherein the panel component behavior to be analyzed is a stress distribution or a shape change.

6. The panel component behavior analysis method according to any one of claim 1 to claim 5, wherein a shape model of the elastic adhesive is a rectangular parallelepiped.

7. The panel component behavior analysis method according to any one of claim 1 to claim 6, wherein the panel component is an automotive panel.

8. A method for predicting an appearance defect of an automotive panel component, the method predicting an appearance defect of an automotive panel component due to thermal deformation by analysis of the panel component behavior analysis method according to claim 7.

9. A panel component behavior analysis device comprising:
a model generation unit configured to model a joint structure in which a panel component and a reinforcing component facing together are connected through one or more elastic adhesives, to generate an analytical model; and
an analysis unit configured to analyze the analytical model of the joint structure by finite element analysis using a computer to analyze behavior of the panel component, wherein
in the model generation unit, at least an elastic coefficient and a thermal expansion coefficient are set as setting conditions of physical properties of the elastic adhesive in the analytical model,
the elastic coefficient to be set is set as a value changing in response to temperature change and using temperature as a parameter, and
the analysis unit is configured to execute processing of analyzing the behavior of the panel component under a temperature change condition in which a temperature change is applied to the joint structure in a previously-set temperature range.

10. The panel component behavior analysis device according to claim 9, wherein
as the temperature change condition, a temperature rise process of heating the joint structure and a temperature drop process of cooling the joint structure are included,
as the elastic coefficient to be set, the elastic coefficient in the temperature drop process is set as a value increasing continuously or intermittently as the temperature decreases, and the elastic coefficient in the temperature rise process is set as a constant value.

11. The panel component behavior analysis device according to claim 9 or claim 10, wherein in the model generation unit, a thermal deformation parameter is set as a physical property condition of at least the panel component of the panel component and the reinforcing component in the analytical model, and the thermal deformation parameter to be set is set as a value at which a component is more easily deformed at a high temperature than at a low temperature.

12. The panel component behavior analysis device according to any one of claim 9 to claim 11, wherein as the temperature change condition, a temperature rise process of heating the joint structure and a temperature drop process of cooling the joint structure are set, at least one process of the two processes is divided along a temperature change direction into two or more processes, and by setting different values as the elastic coefficient to be set for the respective two or more divided processes, the elastic coefficient condition changing in response to temperature change is set.

13. The panel component behavior analysis device according to any one of claim 9 to claim 12, wherein the panel component behavior to be analyzed is a stress distribution or a shape change.

14. The panel component behavior analysis device according to any one of claim 9 to claim 13, wherein a shape model of the elastic adhesive is a rectangular parallelepiped.

15. A panel component behavior analysis program for having a computer perform a model generation step of modeling a joint structure in which a panel component and a reinforcing component facing together are connected through one or more elastic adhesives, in a set setting condition to generate an analytical model and an analysis step of analyzing the analytical model of the joint structure by finite element analysis to analyze behavior of the panel component, wherein
in the model generation step, at least an elastic coefficient and a thermal expansion coefficient are set as setting conditions of physical properties of the elastic adhesive, processing of generating the analytical model is executed under the set conditions,
the elastic coefficient to be set is set as a value changing in response to temperature change and using temperature as a parameter, and
in the analysis step, processing of analyzing behavior of the panel component is executed under a temperature change condition in which a temperature change is applied to the joint structure in a previously-set temperature range.

16. The panel component behavior analysis program according to claim 15, wherein as the temperature change condition, a temperature rise process of heating the joint structure and a temperature drop process of cooling the joint structure are included,
as the elastic coefficient to be set, the elastic coefficient in the temperature drop process is set as a value increasing continuously or intermittently as the temperature decreases, and the elastic coefficient in the temperature rise process is set as a constant value.

17. The panel component behavior analysis program according to claim 15 or claim 16, wherein in the model generation step, a thermal deformation parameter is set as a physical property condition of at least the panel component of the panel component and the reinforcing component, processing of generating the analytical model is executed under the set condition, and
the thermal deformation parameter to be set is set as a value at which a component is more easily deformed at a high temperature than at a low temperature.

18. The panel component behavior analysis program according to any one of claim 15 to claim 17, wherein as the temperature change condition, a temperature rise process of heating the joint structure and a temperature drop process of cooling the joint structure are included, at least one process of the two processes is divided along a temperature change direction into two or more processes, and by setting different values as the elastic coefficient to be set for the respective two or more divided processes, the elastic coefficient condition changing in response to temperature change is set.

19. The panel component behavior analysis program according to any one of claim 16 to claim 18, wherein the panel component behavior to be analyzed is a stress distribution or a shape change.

20. The panel component behavior analysis program according to any one of claim 15 to claim 19, wherein a shape model of the elastic adhesive is set as a rectangular parallelepiped.
